# EUROPÄISCHE PATENTSCHRIFT

(11) **EP 0 733 148 B1**
(45) Veröffentlichungstag und Bekanntmachung des Hinweises auf die Patenterteilung: **06.08.1997**
(21) Anmeldenummer: 95902775.6
(22) Anmeldetag: 18.11.1994
(51) Int. Cl.: E06B 3/54, F16C 11/06

(54) **HALTERUNG FÜR DIE BIEGEMOMENTFREIE LAGERUNG VON GLASPLATTEN**
HOLDER FOR SUPPORTING GLASS PANES WITHOUT SUBJECTING THEM TO BENDING MOMENTS
SUPPORT POUR LE MAINTIEN, SANS MOMENT DE FLEXION, DE PANNEAUX EN VERRE

(30) Priorität: 10.12.1993 DE 4342097
(43) Veröffentlichungstag der Anmeldung: 25.09.1996
(73) Patentinhaber: DANZ, Robert, D-71101 Schönaich (DE)
(72) Erfinder: DANZ, Robert, D-71101 Schönaich (DE)
(74) Vertreter: Böhmer, Hans Erich, Dipl.-Ing.
(86) Internationale Anmeldenummer: EP9403829
(87) Internationale Veröffentlichungsnummer: WO9516099

(56) Entgegenhaltungen:
- EP-A- 0 506 522
- DE-A- 3 927 653
- FR-A- 2 676 768
- GB-A- 2 242 248
- US-A- 3 146 008
- US-A- 4 121 893

## Beschreibung

Die Erfindung betrifft eine biegemomentfreie Lagerung von Glasplatten in beliebiger Lage, vorzugsweise fUr eine Über-Kopf-Montage, mit einem Montagebolzen, der an seinem einen Ende mit einem Kugelkopf versehen ist, und in einem außerhalb des Bereiches der zu befestigenden Glasplatte angeordneten Kugelgelenklager nach allen Seiten begrenzt schwenkbar gelagert ist, sowie mit einem mit den Kugelgelenk verbundenen unteren Auflageteller für die Glasplatte sowie einem mit Befestigungsmitteln an dem unteren Auflageteller befestigbaren, die Glasplatte haltenden oberen Auflageteller. Diese Halterung eignet sich vorzugsweise fUr aus mehreren Einzelscheiben bestehende Glasplatten, insbesondere Sicherheits-Verbundglasplatten.

Eine derartige Halterung ist im Prinzip aus der DE 39 27 653 C2 bekannt.

Obwohl diese bekannte Halterung gegen über dem Stand der Technik bereits eine wesentliche Verbesserung darstellt, war jedoch die Handhabung bei der Montage auf Baustellen, vor allem bei der Über-Kopf-Montage etwas umständlich und damit zeitraubend.

Die der Erfindung zugrundeliegende Aufgabe besteht darin, die bekannte Konstruktion so weiterzuentwickeln, daß die Montage, vor allem die Über-Kopf-Montage wesentlich vereinfacht und damit sicherer wird. Außerdem läßt sich bei der Lagerhaltung von Teilen eine Materialersparnis erzielen.

Diese Aufgabe wird erfindungsgemäß durch die Merkmale des Patentanspruchs 1 in seiner Gesamtheit gelöst.

Vorteilhafte Weiterbildungen der Erfindung sind den weiteren Patentansprüchen zu entnehmen.

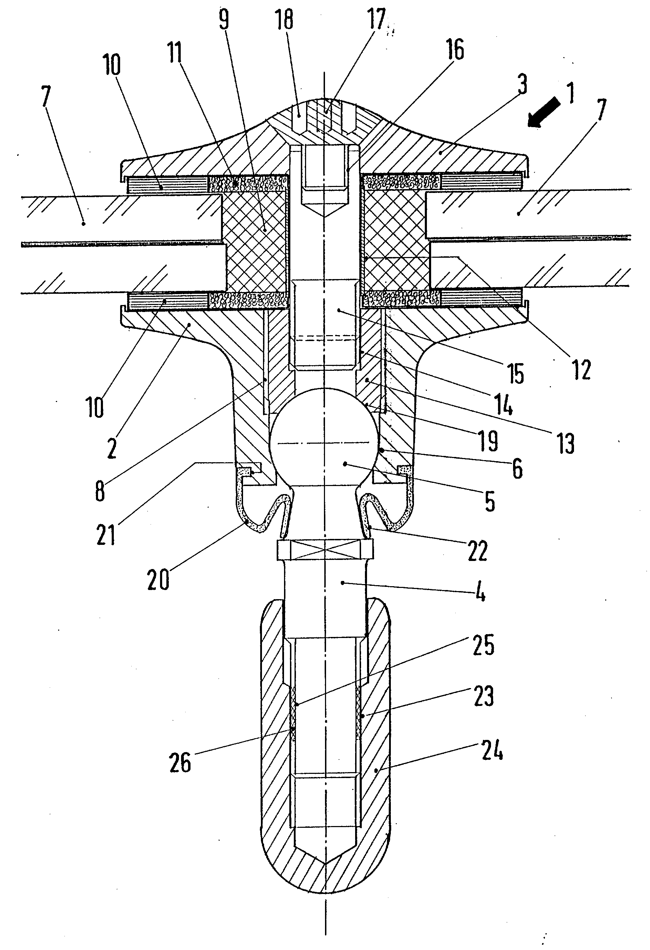

Die Erfindung wird nunmehr anhand eines AusfUhrungsbeispieles in Verbindung mit der beigefügten Zeichnung im einzelnen beschrieben.

In der Zeichnung ist eine Halterung gemäß der Erfindung mit einem Pfeil und dem Bezugszeichen 1 versehen gezeigt. Diese Halterung besteht im Prinzip aus einem unteren Auflageteller 2, einem oberen Auflageteller 3 und einem Montagebolzen 4, an dessen oberen Ende ein Kugelkopf 5 angebracht ist. Dieser Kugelkopf liegt in einem Kugelgelenklager 6, das - wie noch erläutert wird - durch zwei Bauteile gebildet wird. Zwischen den Auflagetellern 2 und 3 sind zwei Glasplatten 7 gezeigt, die beispielsweise eine aus Sicherheitsglas bestehende Verbundglasscheibe bilden können.

In dem unteren Auflageteller, der sich nach unten in einen Schaft fortsetzt, ist eine Bohrung 8 mit einem Innengewinde vorgesehen.

Da das Bohren von Glasplatten bei Verbundglasscheiben normalerweise vor dem Verkleben erfolgt, kommt es öfters vor, daß die Bohrungen der beiden miteinander zu verbindenden Glasplatten nicht miteinander vollständig ausgerichtet sind. Zwischen dem unteren Auflageteller 2 bzw. dem oberen Auflageteller 3 und den Glasplatten 7 sind zwei zueinander konzentrische Dichtungsringe 10 bzw. 11 angeordnet. Die äußeren Dichtungsringe 10 bestehen vorzugsweise aus Neopren, während die dazu konzentrisch angeordneten innerenDichtungsringe vorzugsweise aus einem porenfreien Moosgummi bestehen. Im An schluß an die Dichtungsmasse 9 ist noch eine Abstandshülse 12 vorgesehen, die eine Trennung zwischen der metallischen Befestigung und der Dichtungsmasse 9 schafft. Diese Dichtungsmasse ist vorzugsweise ein aus zwei Komponenten bestehender Kunststoff, der im pastenartigen Zustand nach der Montage eingespritzt wird und soweit aushärtet, daß er eine gewisse Restelastizität beibehält. Dadurch wird erreicht, daß die an sich spröden Glasplatten an keiner Stelle mit metallischen Verbindungsteilen in BerUhrung kommen, so daß bei Auftreten von Zug- und Druckkräften in Längsrichtung der Glasplatten keine Beschädigungen durch eine Berührung zwischen den Glasplatten und metallischen Bauteilen auftreten können.

In ein Innengewinde des unteren Auflagetellers 2 ist eine Sicherungshülse 13 mit ihrem Außengewinde eingeschraubt. Sie weist eine Bohrung mit Innengewinde auf, in die ein Einspannbolzen 15 einschraubbar ist, der der Befestigung der Glasplatten dient. Dieser Einspannbolzen weist an seinem unteren Ende demgemäß ein Außengewinde und an seinem oberen Ende eine Bohrung 16 mit Innengewinde auf, in die eine Befestigungs-und Spannschraube 17 einschraubbar ist. Diese weist an ihrer Oberfläche zwei Sacklochbohrungen auf.

Das untere Ende der Sicherungshülse 13 weist eine kugelkalottenförmige Erweiterung zur Anlage an dem Kugelkopf 5 auf und bildet somit ein Teil des Kugelgelenklagers. Der andere Teil wird, wie bereits erwähnt, durch eine entsprechende Formgebung der Bohrung im Schaft des unteren Auflagetellers 2 erreicht. Am unteren Ende dieses Schaftes ist eine Dichtungsmanschette 20 vorgesehen, die einerseits in eine Nut 21 des Schaftes des unteren Auflagetellers 2 eingreift und andererseits am Schaft des Montagebolzens mit einem zylinderförmigen Abschnitt 22 mit Paßsitz anliegt.

Der Montagebolzen 4 weist an seinem unteren Ende ein Außengewinde 23 auf, das der Befestigung in einer Montagehülse 24 dient. Diese weist ein Innengewinde 25 auf, in das ein Sicherungsgewindeeinsatz 26 eingeschraubt ist, dessen Durchmesser sich von oben nach unten geringfügig verengt, so daß nach festem Einschrauben diese Verbindung unlösbar fest ist.

Die Montage geht nun folgendermaßen vor sich:

Der Montagebolzen 4 mit seinem Kugelkopf 5 wird von oben durch die Bohrung 8 des unteren Auflagetellers 2 eingeschoben bis zum Sitz am unteren Ende des Schaftes des Auflagetellers 2. Die Bohrung am Ende des Schaftes des Auflagetellers 2 ist so gewählt, daß der Kugelkopf 5 des Montagebolzens 4 in keinem Fall durch diese Öffnung, auch nicht mit Gewalt, herausgezogen werden kann. Daraufhin wird die SicherungshUlse 13 in die mit Innengewinde versehene Bohrung des Auflagetellers 2 bis zur leichten Berührung mit dem Kugelkopf eingeschraubt. Die Beweglichkeit des Kugelkopfes in dem Kugelgelenklager läßt sich damit fein justieren.

Anschließend wird der Einspannbolzen 15 in das Innengewinde der Sicherungshülse 13 eingeschraubt. Anschließend können zunächst die Dichtungsringe 10 und 11 auf den unteren Auflageteller aufgelegt werden, die Abstandshülse 12 Uber den Einspannbolzen 15 geschoben werden, worauf die beiden Glasplatten 7 aufgelegt werden können. Anschließend werden die oberen kreisringförmigen Dichtungsringe 10 und 11 aufgelegt, der obere Auflageteller 3 Uber den Einspannbolzen aufgesetzt, worauf die Befestigungs- und Spannschraube 17 in die Bohrung 16 des Einspannbolzens 15 eingeschraubt wird. Allerdings ist es zweckmäßig, vorher die Dichtungsmasse 9 einzuspritzen.

Durch diese Zweiteilung des Einspannbolzens ohne einen Kopf und eine davon getrennte Befestigungs- und Spannschraube 17 wird der Zusammenbau wesentlich vereinfacht. Insbesondere kann fUr verschiedene Glasstärken jeweils ein Vorrat von Einspannbolzen unterschiedlicher Länge bereitgehalten werden. Alle anderen Teile können fUr alle Glasstärken gleich gewählt werden. Dies vereinfacht die Lagerhaltung ganz erheblich. Außerdem ist dadurch auch eine Anpassung dieser Halterung an ungewöhnliche Glasstärken in einfachster Weise möglich.

Von besonderem Vorteil ist es, wenn die Oberfläche des Kugelkopfes 5 im Plasma mit Kohlenstoff oder Stickstoff implantiert wird. Dadurch erhält man eine fUr lange Zeit wirksame hohe Gleitfähigkeit zwischen dem Kugelkopf und den beiden Teilen des Kugelgelenklagers.

Wichtig fUr die Über-Kopf-Montage ist die Dichtungsmanschette 20, die durch ihre besondere Formgebung einen einwandfrei dichten Abschluß zwischen dem Schaft des Montagebolzens einerseits und dem Schaft des unteren Auflagetellers 2 andererseits liefert, so daß auch bei Über-Kopf-Montage keine Feuchtigkeit in das Kugelgelenklager 6 eindringen kann.

Schließlich sei noch erwähnt, daß durch die besondere Ausgestaltung der oberen Auflageplatte 3 mit ihrer leichten Wölbung und der mit seiner Wölbung entsprechenden Ausgestaltung der Befestigungs- und Spannschraube 17 ein ebenso dichter Abschluß erreicht wird. Durch den konischen Sitz der Befestigungs-, und Spannschraube 17 in einer entsprechenden Bohrung des oberen Auflagetellers 3 wird ebenfalls ein besonders dichter Abschluß erzielt. Außerdem bietet die Befestigungs- und Spannschraube 17 keine Angriffspunkte fUr ein unbefugtes Öffnen dieser Schraubverbindung. Diese Verbindung ist nur mit Hilfe eines in die Sacklochbohrungen 18 passenden besonderen Werkzeugs lösbar. Dadurch lassen sich zumindestens mutwillige Versuche, diese Schraube zu lösen, unterbinden.

Schließlich sei noch erwähnt, daß diese Formgebung auch ästhetisch ansprechend ist.

## Patentansprüche

1. Halterung für die biegemomentfreie Lagerung von Glasplatten mit einem Montagebolzen (4), der an seinem einen Ende mit einem Kugelkopf versehen und in einem außerhalb des Bereiches der zu befestigenden Glasplatte (7) angeordneten Kugelgelenklager (6) nach allen Seiten begrenzt schwenkbar gelagert ist, sowie mit einem das Kugelgelenklager umschließenden Teil eines unteren Auflagetellers (2) für die Glasplatte, wobei der den Kugelkopf (5) tragende Montagebolzen (4) in eine entsprechend große, mit Innengewinde versehene Bohrung (8) des unteren Auflagetellers (2) einschie-bbar ist, wobei ferner eine mit Außengewinde und Innengewinde versehene Sicherungshülse bis zur BerUhrung mit dem Kugelkopf (5) in das Innengewinde (8) des unteren Auflagetellers einschraubbar ist, während ein an seinem unteren Ende mit einem Außengewinde versehener Einspannbolzen (15), der in das Innengewinde der Sicherungshülse (13) einschraubbar ist, an seinem oberen Ende eine Bohrung (16) mit Innengewinde aufweist, in die eine einen oberen Auflageteller (3) in einer Bohrung durchsetzende Befestigungs-und Spannschraube (17) einschraubbar ist, und wobei die SicherungshUlse (13) an ihrem unteren. Ende eine hohlkugelkalottenförmige Aushöhlung (19) aufweist, die zusammen mit der ebenfalls hohlkugelkalottenförmigen Ausgestaltung der Bohrung des unteren Auflagetellers (2) das Kugelgelenk (6) bildet, während die daran anschließende Bohrung lediglich den Durchtritt des Schaftes des Montagebolzens gestattet

2. Halterung nach Anspruch 1, mit kreisringförmigen Dichtungsringen jeweils zwischen der Glasplatte und den Auflagetellern, bei welcher diese Dichtungsringe jeweils aus einem äußeren Dichtungsring (10), beispielsweise aus Neopren und einem konzentrisch dazu angeordneten inneren zweiten kreisringförmigen Dichtungsring (11) bestehen, der aus einem weichelastischen Material, z.B. einem porenfreien Moosgummi besteht, an dem die nach Zusammenbau eingeführte begrenzt elastische Dichtungsmasse (9) anliegt.

3. Halterung nach Anspruch 1 und 2, bei welcher am unteren Ende des unteren Auflagetellers eine Dichtungsmanschette (20) vorgesehen ist, die einerseits in eine Ringnut (21) des Schaftes des unteren Auflagetellers (2) eingreift und andererseits am Schaft des Montagebolzens (4) mit Preßsitz anliegt.

4. Halterung nach Anspruch 1 bis 3, bei welcher der Montagebolzen (4) an seinem unteren Ende mit einem Außengewinde (23) versehen ist, wobei eine MontagehUlse (24) mit einem Innengewinde (25) und einem Sicherungsgewindeeinsatz (26) mit entsprechendem Außengewinde und einem sich leicht nach unten verjüngenden konischen Innengewinde vorgesehen ist, in das der Montagebolzen zur unverrückbaren gesicherten Halterung einschraubbar ist.

5. Halterung nach Anspruch 1, bei welcher der Kugelkopf (5) des Montagebolzens (4) mit Plasma beispielsweise mit Bor, Molybdän, Titan, Stickstoff und/oder Kohlenstoff bei relativ niedriger Temperatur implantiert ist.

6. Halterung nach Anspruch 1, bei welcher die äußere Oberfläche des oberen Auflagetellers flach gewölbt ist, wobei die äußere Kontur des Kopfes der Befestigungs- und Spannschraube dieser Kontur angepaßt ist und zwei Sacklochbohrungen für das Anziehen und Lösen dieser Schraube enthält.

## Claims

1. Holding device for bending moment-free support of glass sheets with an assembly bolt (4), which is provided at one end with a ball head and which is supported in a ball-and-socket joint bearing (6) to be secured outside the area of the glass sheet (7) such that it can be pivoted to a restricted extent to all sides, and with a part of the lower support plate (2) for the glass sheet surrounding the ball-and-socket joint bearing, whereby the assembly bolt (4) supporting the ball head (5) can be inserted in a correspondingly large hole (8) with internal thread of the lower support plate (2), whereby in addition a fixing sleeve provided with an external thread and an internal thread can be screwed into the internal thread of the lower support plate until it comes into contact with the ball head (5), while a clamping bolt (15), which is provided with an external thread at its lower end for screwing into the internal thread of the fixing sleeve (13), possesses a hole (16) with internal thread at its upper end into which a fixing and clamping screw (17) passing through a hole in an upper support plate (3) can be screwed, and whereby the fixing sleeve (13) possesses a hollow universal ball joint-shaped recess (19) at its lower end which forms the ball-and-socket joint (6) together with the also hollow universal ball joint-shaped design of the hole of the lower support plate (2), while the adjacent hole permits penetration only by the shank of the assembly bolt.

2. Holding device in accordance with claim 1, with ring-shaped sealing rings in each case between the glass sheet and the support plates, wherein said sealing rings each consist of an outer sealing ring (10), for example made of neoprene, and of a second concentrically located inner ring-shaped sealing ring (11), which consists of a flexible material, e.g. a pore-free cellular rubber, and with which the sealing compound (9) with limited elasticity injected after assembly has contact.

3. Holding device in accordance with claims 1 and 2, wherein a sealing sleeve (20) is provided at the lower end of the lower support plate which engages in a ring groove (21) of the shank of the lower support plate on the one hand and is in contact with the shank of the assembly bolt (4) with a snug fit on the other hand.

4. Holding device in accordance with claims 1 to 3, wherein the assembly bolt (4) is provided at its lower end with an external thread (23), whereby an assembly sleeve (24) is provided which has an internal thread (25) and a threaded fixing insert (26) as well as a conical internal thread which tapers slightly in downward direction, into which the assembly bolt can be screwed to produce an immovably secured holding device.

5. Holding device in accordance with claim I, wherein the ball head (5) of the assembly bolt (4) is implanted with plasma, for example with boron, molybdenum, titanium, nitrogen and/carbon at a relatively low temperature.

6. Holding device in accordance with claim 1, wherein the outer surface of the upper support plate is shaped as a flat dome, whereby the outer contour of the head of the fixing and clamping screw is adapted to this contour and has two blind holes for tightening and undoing this screw.

## Revendications

1. Fixation pour le logement sans couple de torsion de plaques de verre avec un goujon de montage (4) dont une extrémité est munie d'une tête sphérique et monté pivotant de manière limitée de tous côtés sur une articulation à rotule (6) disposée en-dehors de la zone correspondant à la plaque de verre à fixer (7), ainsi qu'avec une partie d'un plateau d'appui inférieur (2) entourant l'articulation à rotule, pour la plaque de verre, le goujon de montage (4) supportant la tête sphérique (5) pouvant coulisser dans un perçage (8) muni d'un filet femelle, de dimension adéquate, du plateau d'appui inférieur (2), une douille de sûreté munie d'un filet mâle et d'un filet femelle pouvant par ailleurs être vissée dans le filet femelle (8) du plateau d'appui inférieur jusqu'au contact avec la tête sphérique (5), tandis qu'un goujon de serrage (15), dont l'extrémité inférieure est munie d'un filet mâle, qui peut être vissé dans le filet femelle de la douille de sûreté (13), présente à son extrémité supérieure un perçage (16) muni d'un filet femelle dans lequel peut être vissée une vis de fixation et de serrage (17) traversant un perçage d'un plateau d'appui supérieur (3), et la douille de sûreté (13) présentant à son extrémité inférieure un évidement (19) en forme de calotte sphérique creuse qui forme, avec la configuration également en forme de calotte sphérique creuse du perçage du plateau d'appui inférieur (2), l'articulation à rotule (6), tandis que le perçage sert uniquement au passage de la tige du goujon de montage.

2. Fixation selon la revendication 1, caractérisée en ce que des bagues d'étanchéité circulaires sont respectivement disposées entre la plaque de verre et les plateaux d'appui, ces bagues d'étanchéité se composant d'une bague d'étanchéité extérieure (10), par exemple en Néoprène, et d'une seconde bague d'étanchéité circulaire intérieure concentrique (11), composée d'une matière élastique souple, par exemple de caoutchouc mousse non poreux, contre laquelle s'appuie la masse d'étanchéité (9) d'élasticité limitée mise en place après l'assemblage.

3. Fixation selon l'une et l'autre des revendications 1 et 2, caractérisée en ce qu'est prévu, à l'extrémité inférieure du plateau d'appui inférieur, un manchon d'étanchéité (20) qui pénètre d'une part dans une gorge circulaire (21) de la tige du plateau d'appui inférieur (2) et qui s'appuie d'autre part sur la tige du goujon de montage (4) avec un ajustage serré.

4. Fixation selon l'une quelconque des revendications 1 à 3, caractérisée en ce que le goujon de montage (4) est muni, à son extrémité inférieure, d'un filet mâle (23) et en ce qu'est prévue une douille de montage (24) avec un filet femelle (25) et un insert fileté de sûreté (26) avec un filet mâle correspondant et un filet femelle légèrement conique vers le bas, dans lequel peut être vissé le goujon de montage pour assurer une tenue immuable.

5. Fixation selon la revendication 1, caractérisée en ce que la tête sphérique (5) du goujon de montage (4) est implantée à température relativement basse au plasma, par exemple avec du bore, du molybdène, du titane, de l'azote et/ou du carbone.

6. Fixation selon la revendication 1, caractérisée en ce que la surface extérieure du plateau d'appui supérieur est plate, bombée, la forme extérieure de la tête de la vis de fixation et de serrage étant adaptée à cette forme et présentant deux perçages à trou borgne pour le serrage et le desserrage de cette vis.
